Europäisches Patentamt

European Patent Office

Office européen des brevets

(19)

(11) **EP 0 922 210 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(21) Anmeldenummer: **97941799.5**

(22) Anmeldetag: **20.08.1997**

(51) Int Cl.⁷: **G01M 15/00**, F02M 25/07

(86) Internationale Anmeldenummer:
**PCT/DE97/01803**

(87) Internationale Veröffentlichungsnummer:
**WO 98/009067 (05.03.1998 Gazette 1998/09)**

(54) **DIAGNOSEEINRICHTUNG ZUM ÜBERWACHEN EINES ABGASRÜCKFÜHRSYSTEMS EINER BRENNKRAFTMASCHINE**

DIAGNOSTIC DEVICE FOR MONITORING AN EXHAUST GAS RETURN SYSTEM OF AN INTERNAL COMBUSTION ENGINE

DISPOSITIF DE DIAGNOSTIC DESTINE A LA SURVEILLANCE D'UN SYSTEME DE RECYCLAGE DES GAZ D'ECHAPPEMENT D'UN MOTEUR A COMBUSTION INTERNE

(84) Benannte Vertragsstaaten:
**DE FR GB SE**

(30) Priorität: **29.08.1996 DE 19634975**

(43) Veröffentlichungstag der Anmeldung:
**16.06.1999 Patentblatt 1999/24**

(73) Patentinhaber: **SIEMENS AKTIENGESELLSCHAFT**
**80333 München (DE)**

(72) Erfinder:
- **BAYERLE, Klaus**
  **D-93051 Regensburg (DE)**
- **SCHNEIDER, Stefan**
  **D-93173 Wenzenbach (DE)**
- **ZHANG, Hong**
  **D-93057 Regensburg (DE)**
- **ENGL, Maximilian**
  **D-86316 Friedberg (DE)**

(56) Entgegenhaltungen:
DE-A- 4 326 351          US-A- 5 542 400

EP 0 922 210 B1

**Beschreibung**

Die Erfindung betrifft eine Diagnoseeinrichtung in einer elektronischen Motorsteuerung für ein Abgasrückführsystem einer Brennkraftmaschine.

Ein Abgasrückführsystem einer Brennkraftmaschine dient dazu, den Stickoxidanteil im Abgas zu reduzieren. Da das Abgas der Brennkraftmaschine in seinen wesentlichen Bestandteilen ein Inertgas ist, kann durch Zumischen von Abgas zur angesaugten Verbrennungsluft die Verbrennungs-Spitzentemperatur gesenkt und damit der Ausstoß von Stickoxiden reduziert werden. Die Masse des rückgeführten Abgases im Verhältnis zur Summe aus der Masse eines Frischgases (Ansaugluft) und der Masse des rückgeführten Abgases wird im folgenden als Abgasrückführrate bezeichnet.

Bei einer Abgasrückführrate von 10% werden die Stickoxidemissionen bereits um etwa 50% reduziert. Die HC- und CO-Emissionen der Brennkraftmaschine können durch ein Abgasrückführ-System nicht signifikant verringert werden. Die Abgasrückführrate muß möglichst genau eingestellt werden, da sonst bei einer zu hohen Abgasrückführrate ein Anstieg der HC- und CO-Anteile im Abgas erfolgt.

Abgasrückführsysteme können darüber hinaus auch zu einer Senkung des Kraftstoffverbrauchs eingesetzt werden. Bei derartigen Abgasrückführsystemen wird eine signifikante Verringerung des Kraftstoffverbrauchs im Teillastbetrieb der Brennkraftmaschine erreicht durch eine sehr hohe AGR-Rate (>20%), da die Drosselverluste sowie die Wandwärmeverluste im Brennraum der Brennkraftmaschine verringert werden.

Eine bekannte Diagnoseeinrichtung (DE 42 16 044 A1) überwacht ein Abgasrückführ-System einer Brennkraftmaschine. Das Abgasrückführ-System umfaßt eine Abgasrückführleitung, die einen Abgastrakt mit einem Ansaugtrakt verbindet und deren Öffnungsquerschnitt mittels eines Abgasrückführventils beeinflußbar ist. Desweiteren ist eine Steuereinrichtung zum Steuern des Abgasrückführventils vorgesehen. Aus der DE 42 16 044 ist es bekannt, die Diagnoseeinrichtung derart auszubilden, daß zum Überwachen der notwendigen Abgasrückführrate die Temperatur des rückgeführten Abgases in der Abgasrückführleitung gemessen wird. Diese Überwachung ist jedoch insbesondere bei einer hohen Abgasrückführrate nicht zuverlässig möglich, da die Temperaturanstiegsgradienten sehr flach sind und Störungen durch die Umgebungsbedingungen wie z. B. die Motorraumtemperatur nicht zu eliminieren sind.

Aus der DE 42 16 044 A1 ist es auch bekannt, die eine Änderung des Saugrohrdrucks bei einem Öffnen oder Schließen des Abgasrückführventils zu erfassen und somit zu erkennen, ob Abgas ordnungsgemäß durch den Abgasrückführkanal strömt, wenn das Abgasrückführventil geöffnet wird. Dazu wird in einem vorgegebenen Betriebszustand der Brennkraftmaschine, wie z. B. im Schubbetrieb, das Abgasrückführventil geschlossen und anschließend geöffnet. Somit ist ein aktiver Eingriff in die Steuerung des Abgasrückführventils notwendig, der zu Emissions- und Fahrbarkeitsproblemen führt.

Die bekannte Diagnoseeinrichtung ist derart ausgebildet, daß sie in vorgegebenen Betriebszuständen der Brennkraftmaschine eine Aussetzererkennung durchführt. Dabei erfolgt jedoch auch wieder ein aktiver Eingriff in die Abgasrückführsteuerung.

Die Aufgabe der Erfindung ist es, eine Diagnoseeinrichtung zum Überwachen eines Abgasrückführsystems einer Brennkraftmaschine zu schaffen ohne die genannten Nachteile, die darüber hinaus einfach und zuverlässig ist.

Die Aufgabe wird erfindungsgemäß durch die Merkmale des Patentanspruchs 1 gelöst. Vorteilhafte Ausgestaltungen der Erfindung sind in den Unteransprüchen gekennzeichnet.

Ausführungsbeispiele der Erfindung sind im folgenden unter Bezugnahme auf die schematischen Zeichnungen näher erläutert.

Es zeigen:

Figur 1: Eine Brennkraftmaschine, die die erfindungsgemäße Diagnoseeinrichtung umfaßt,
Figur 2: Ein Ablaufdiagramm des Programms, mit dem eine erste Ausführungsform der Diagnoseeinrichtung das Abgasrückführ-System überwacht,
Figur 3: Ein Ablaufdiagramm des Programms, mit dem eine zweite Ausführungsform der Diagnoseeinrichtung das Abgasrückführ-System überwacht, und
Figur 4: Ein Ablaufdiagramm des Programms, mit dem eine dritte Ausführungsform der Diagnoseeinrichtung das Abgasrückführ-System überwacht wird.

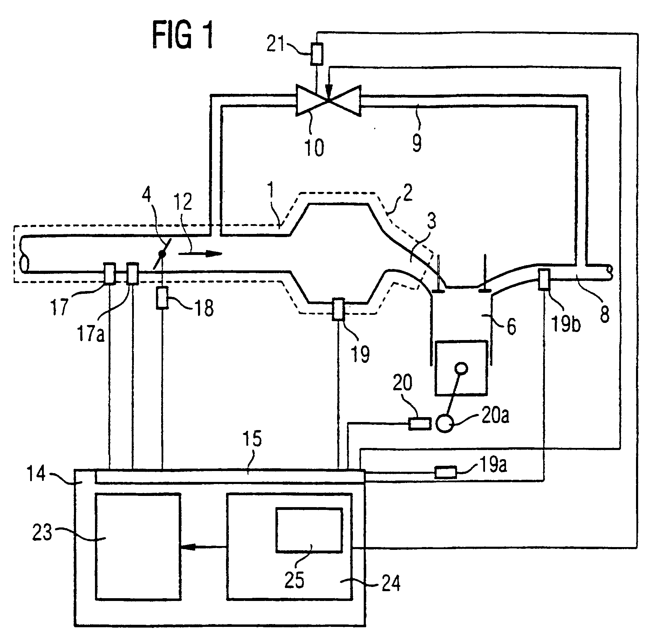

In Figur 1 ist eine Brennkraftmaschine gezeigt, wobei nur diejenigen Teile der Brennkraftmaschine dargestellt sind, die für das Verständnis der Erfindung notwendig sind.

Ein Ansaugtrakt 1 weist einen Sammler 2 und ein Saugrohr 3 auf. Des weiteren ist im Ansaugtrakt 1 eine Drosselklappe 4 angeordnet. Das Saugrohr 3 verbindet den Sammler 2 mit einem Einlaß eines Zylinders 6. Der Zylinder 6 ist mit einem Abgastrakt 8 verbunden, über den die Abgase ausgestoßen werden. Eine Abgasrückführleitung 9 zweigt von dem Abgastrakt 8 ab und mündet in Strömungsrichtung der Ansaugluft (mit dem Pfeil 12 bezeichnet) in den Ansaugtrakt 1. Ein Abgasrückführventil 10, das einen nicht dargestellten elektromagnetischen Aktor umfaßt ist in der Abgasrückführleitung 9 angeordnet.

Eine elektronische Motorsteuerung 14 umfaßt eine Vorverarbeitungseinheit 15, die Signale aufbereitet von Sensoren, die Betriebsgrößen der Brennkraftmaschine erfassen. In dem hier dargestellten Ausführungsbeispiel ist ein Temperatursensor 17 vorgesehen, der die Temperatur der Ansaugluft erfaßt. Ein Winkelgeber 18 erfaßt den Öffnungswinkel der Drosselklappe 4, einen Drucksensor 19 erfaßt einen Saugrohrdruck MAP_MES, ein Kurbelwellenwinkelgeber 20 erfaßt jeweils den aktuellen Kurbelwellenwinkel, ein Öffnungsgrad-Fühler 21 erfaßt einen Öffnungsgrad des Abgasrückführventils 10. In einer komfortablen Ausführungsform der Erfindung ist darüber hinaus noch mindestens einer der folgenden Sensoren vorgesehen: ein Luftmassenmesser 17a, der einen Luftmassenstrom erfaßt; ein Motortemperatursensor 19a, der die Motortemperatur der Brennkraftmaschine erfaßt und ein Abgastemperatursensor 19b, der die Abgastemperatur in dem Abgastrakt 8 erfaßt. Alternativ können die Sensorsignale auch über einen Bus (CAN-Bus) übertragen werden.

Die elektronische Motorsteuerung 14 weist darüber hinaus eine erfindungsgemäße Diagnoseeinrichtung 23 auf, die das Abgasrückführ-System überwacht. Die elektronische Motorsteuerung 14 weist auch eine Steuereinrichtung 24 auf, die elektrisch leitend mit dem Aktor des Abgasrückführventils 10 verbunden ist. Sie steuert den Aktor des Abgasrückführventils 10 derart an, daß in Abhängigkeit von mindestens einer Betriebsgröße der Brennkraftmaschine - z. B. der Öffnungswinkel der Drosselklappe 4 und einer Drehzahl n der Kurbelwelle 20a - der Öffnungsgrad des Abgasrückführventils 10 eingestellt wird. Alternativ zu dem elektromagnetischen Aktor des Abgasrückführventils 10 kann auch ein elektropneumatischer Wandler vorgesehen sein. Die Steuereinrichtung 24 ermittelt in bekannter Weise eine Kraftstoffmasse, die pro Arbeitsspiel des Zylinders 6 eingespritzt wird.

Die Steuereinrichtung 24 weist einen Beobachter 25 auf, der ein physikalisches Modell des Ansaugtraktes 1 umfaßt. Durch dieses Modell können auch im Instationärbetrieb der Brennkraftmaschine Betriebsgrößen ermittelt werden, die nicht direkt von Sensoren erfaßt werden. In diesem Ausführungsbeispiel der Erfindung ermittelt der Beobachter in Abhängigkeit von dem Öffnungswinkel der Drosselklappe und der Drehzahl n einen Beobachter Saugrohrdruck MAP_MDL. Vorzugsweise stehen dem Beobachter auch der Umgebungsdruck und/oder die Abgastemperatur und/oder die Temperatur in dem Ansaugtrakt und/oder eine den Hubverlauf der Gaswechselventile der Brennkraftmaschine bestimmende Steuergröße zum Ermitteln des Beobachter Saugrohrdrucks MAP_MDL zur Verfügung. Das Modell beruht beispielsweise auf Differentialgleichungen, die sich aus der Zustandsgleichung idealer Gase ableiten lassen, und der Durchflußgleichung idealer Gase. Ein derartiges Modell ist in einer älteren Anmeldung derselben Anmelderin (WO 96/32579) beschrieben.

In einer anderen vorteilhaften Ausführungsform der Erfindung weist der Beobachter ein physikalisches Modell des Ansaugtraktes 1 und des Abgasrückführsystems auf und ermittelt in Abhängigkeit von dem Öffnungswinkel der Drosselklappe, dem Öffnungsgrad des Abgasrückführventils 10 und der Drehzahl n den Beobachter-Saugrohrdruck MAP_EGR_MDL, der eine Modellgröße für den Abgaspartialdruck im Ansaugtrakt ist. Vorzugsweise stehen dem Beobachter auch der Umgebungsdruck und/oder die Abgastemperatur und/oder die Temperatur in dem Ansaugtrakt und eine den Hubverlauf der Gaswechselventile der Brennkraftmaschine bestimmende Steuergröße zum Ermitteln des Beobachter-Saugrohrdrucks MAP_EGR_MDL zur Verfügung. Ein derartiges Modell ist in einer nichtveröffentlichten Anmeldung derselben Anmelderin ( Amtl. Aktenzeichen P 19610290.1 - unser Zeichen GR 96 P1259) beschrieben (WO-A2,3-97-35/06 veröffentlicht 25,9,97 und 30,10,97). Es ist selbstverständlich, daß außer den genannten Betriebsgrößen zum Ermitteln des Beobach ter-Saugrohrdrucks MAP_MDL, MAP_EGR_MDL auch noch weitere Betriebsgrößen verwendet werden können.

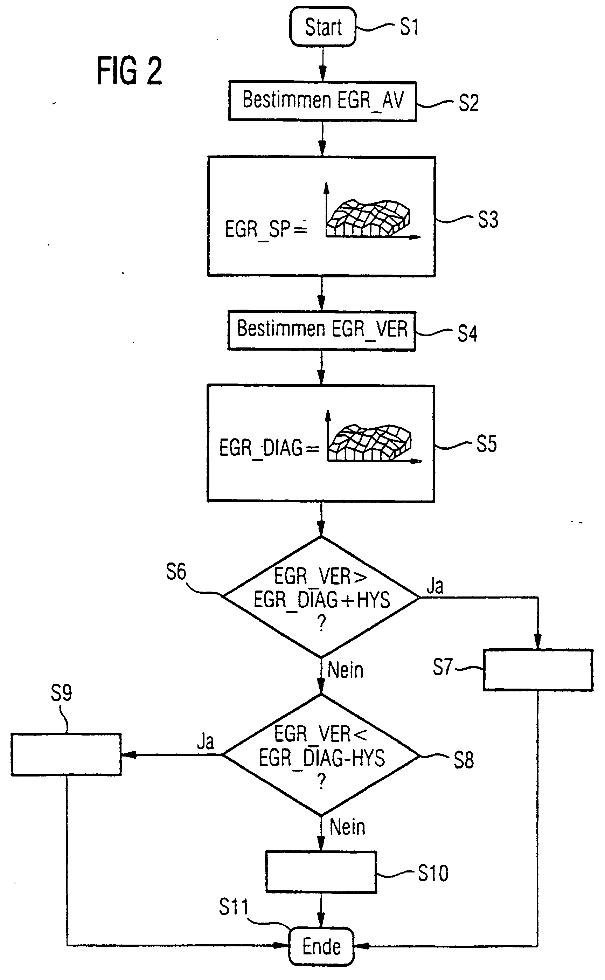

Ein Ablaufdiagramm des Programms, mit dem eine erste Ausführungsform der Diagnoseeinrichtung das Abgasrückführ-System überwacht wird, ist in Figur 2 dargestellt. In einem Schritt S1 wird das Programm gestartet.

In einem Schritt S2 wird ein Sollwert EGR_AV der Abgasrückführrate bestimmt. Der Drucksensor 19 erfaßt den Saugrohrdruck MAP_MES und der Beobachter 25 ermittelt den Beobachter-Saugrohrdruck MAP_MDL. Der Beobachter umfaßt in diesem Ausführungsbeispiel nur ein Modell des Ansaugtraktes 1 der Brennkraftmaschine. Der Abgaspartialdruck, der proportional zu einem Abgasmassenstrom an den Abgasrückführventil 10 ist, wird somit durch dieses Modell nicht erfaßt. So wird der Istwert EGR_AV vorteilhaft ermittelt nach der Formel

$$EGR\_AV = \frac{MAP\_MES-MAP\_MDL}{MAP\_MES} \qquad \text{(F1)}$$

In dem Schritt S3 wird ein Sollwert EGR_SP der Abgasrückführrate aus einem fest abgespeicherten Kennfeld KF1 ausgelesen. In dem Kennfeld KF1 sind Sollwerte abhängig von einer Lastgröße (z. B. ein Luftmassenstrom an der Drosselklappe 4) und der Drehzahl n und/ oder einer Motortemperatur und/ oder einer dem Hubverlauf der Gaswechselventile der Brennkraftmaschine bestimmenden Steuergröße abgelegt.

In einem Schritt S4 wird ein Diagnosewert EGR_VER,EGR_DIF des Abgasrückführsystems ermittelt. So wird dem Diagnosewert EGR_VER das Verhältnis von dem Istwert EGR_AV und dem Sollwert EGR_SP zugeordnet. Alternativ kann auch dem Diagnosewert EGR_DIF eine Differenz von dem Istwert EGR_AV und dem Sollwert EGR_SP zugeordnet werden.

In einem Schritt S5 wird ein Diagnoseschwellenwert EGR_DIAG aus einem zweiten Kennfeld KF2 ausgelesen und ggf. interpoliert. In dem Kennfeld KF2 sind Diagnoseschwellenwerte EGR_DIAG fest abgespeichert in Abhängigkeit von mindestens einer Betriebsgröße der Brennkraftmaschine. Es ist vorteilhaft, wenn die Diagnoseschwellenwerte in dem Kennfeld KF2 in Abhängigkeit von einer Lastgröße - z.B. der Luftmassenstrom an der Drosselklappe 4 oder der Öffnungswinkel der Drosselklappe 4 und der Drehzahl n - und/ oder des Umgebungsdrucks und/ oder der Abgastemperatur und/ oder der Temperatur in dem Ansaugtrakt 1 und/ oder einer von dem Hubverlauf der Gaswechselventile der Brennkraftmaschine bestimmenden Steuergröße abgelegt sind.

In einem Schritt S6 wird geprüft, ob der Diagnosewert des Abgasrückführsystems EGR_VER, EGR_DIF größer ist als der Diagnoseschwellenwert EGR_DIAG plus ein Hysteresewert HYS. Der Hysteresewert HYS ist entweder fest vorgegeben oder abhängig von mindestens einer Betriebsgröße der Brennkraftmaschine. Ist die im Schritt S6 geprüfte Bedingung erfüllt, so wird in dem Schritt S7 verzweigt. Dort erkennt die Diagnoseeinrichtung 23, daß der Durchfluß durch die AGR Rückführleitung 9 zu hoch ist. Anschließend wird das Programm im Schritt S11 beendet.

Ist die im Schritt S6 geprüfte Bedingung nicht erfüllt, so wird in den Schritt S8 verzweigt, indem überprüft wird, ob der Diagnosewert EGR_VER, EGR_DIF kleiner ist als der Diagnoseschwellenwert EGR_DIAG minus dem Hysteresewert HYS. Ist dies der Fall so wird in den Schritt S9 verzweigt, in dem die Diagnoseeinrichtung 23 den Durchfluß durch die Abgasrückführleitung 9 als zu gering erkennt. Das Verfahren wird dann im Schritt S11 beendet.

Ist die im Schritt S8 geprüfte Bedingung nicht erfüllt, so wird in den Schritt S10 verzweigt, in dem erkannt wird, daß das Abgasrückführsystem einwandfrei funktioniert. Anschließend wird das Programm im Schritt S10 beendet.

In den Schritten S6 und S8 wird somit überprüft ob der Diagnosewert EGR_VER außerhalb eines Wertebereichs liegt, dessen untere Grenze der Diagnoseschwellenwert EGR_DIAG minus dem Hysteresewert und dessen obere Grenze der Diagnoseschwellenwert EGR_DIAG plus dem Hysteresewert ist. Es ist vorteilhaft, wenn auch der Hysteresewert HYS abhängig von mindestens einer Betriebsgröße ermittelt wird.

Ein Programm gemäß des Ablaufdiagramms wird vorzugsweise in vorgegebenen Zeitabständen während des Betriebs der Brennkraftmaschine zyklisch gestartet.

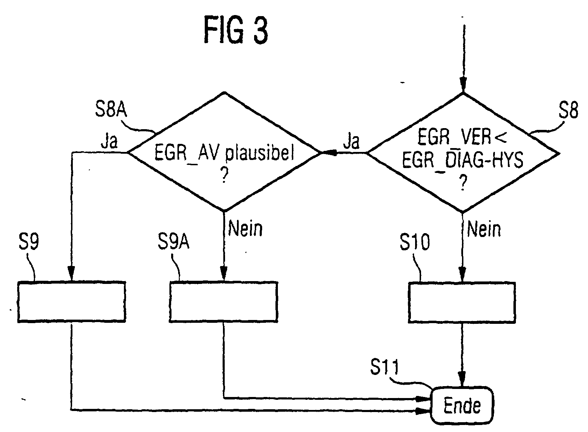

Ein Ablaufdiagramm des Programms, mit dem eine zweite Ausführungsform der Diagnoseeinrichtung 23 das Abgasrückführ-System überwacht zeigt Figur 3. Im Unterschied zu Figur 2 wird in einen Schritt S8a verzweigt, wenn in dem Schritt S8 festgestellt wurde, daß der Diagnosewert EGR_VER, EGR_DIF kleiner ist als der Diagnoseschwellenwert EGR_DIAG minus dem Hysteresewert HYS ist. In dem Schritt S8a wird überprüft, ob der Istwert EGR_AV der Abgasrückführrate plausibel ist. Hierzu wird der Aktor des Abgasrückführventils 10 von der Steuereinrichtung 24 derart angesteuert, daß das Abgasrückführventil 10 schließt.

Bei geschlossenem Abgasrückführventil 10 wird dann überprüft, ob der Diagnosewert EGR_VER innerhalb eines zweiten Wertebereichs liegt, dessen obere Grenze durch die Summe eines zweiten Diagnoseschwellenwerts und des Hysteresewertes HYS vorgegeben ist und dessen untere Grenze durch die Differenz eines zweiten Diagnoseschwellenwertes und des Hysteresewertes HYS vorgegeben ist.

Ist dies der Fall, so wird auf Plausibilität erkannt und in den Schritt S9 verzweigt, in dem analog zu Figur 1 auf einen zu geringen Durchfluß durch die Abgasrückführleitung 9 erkannt wird.

Ist der Istwert EGR_AV in Schritt S8 nicht plausibel, so wird in den Schritt S9a verzweigt. Eine Diagnose ist in diesem Schritt nicht möglich, da ein Fehler in der elektronischen Motorsteuerung 14 oder bei einem der Sensoren vorliegt. Ggf. wird hier eine weitere Funktion zur Erkennung dieses Fehlers aufgerufen. Anschließend wird das Programm in dem Schritt S11 beendet.

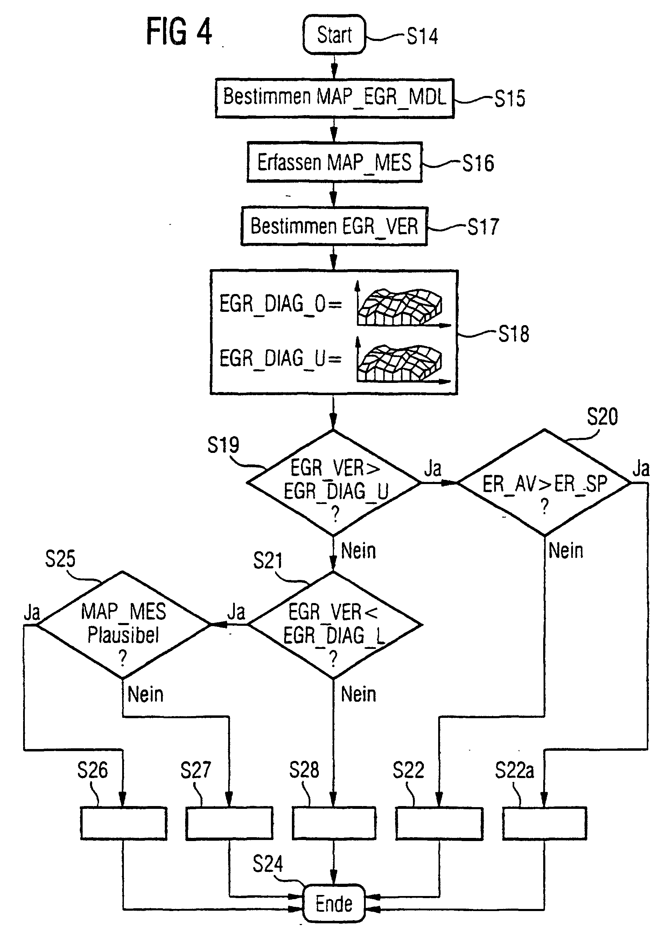

Ein Ablaufdiagramm des Programms, mit dem eine dritte Ausführungsform der Diagnoseeinrichtung 23 das Abgasrückführ-System überwacht, zeigt Figur 4. In einem Schritt S14 wird das Programm gestartet

In einem Schritt S15 wird ein Beobachter-Saugrohrdruck MAP_EGR_MDL ermittelt. Dieser Beobachtersaugrohrdruck MAP_EGR_MDL wird in dem Beobachter 25 mit Hilfe eines physikalischen Modells des Ansaugtraktes 1 und des Abgasrückführsystems - wie es weiter oben beschrieben wurde - ermittelt.

In einem Schritt S16 wird der Saugrohrdruck MAP_MES von dem Drucksensor 19 erfaßt. In einem Schritt S17 wird der Diagnosewert EGR_VER ermittelt, dem hier das Verhältnis aus dem Saugrohrdruck MAP_MES und dem Beobachter-Saugrohrdruck MAP_EGR_MDL zugeordnet ist.

In dem Schritt S18 wird ein oberer Diagnoseschwellenwert EGR_DIAG_U aus einem dritten Kennfeld KF3 ermittelt, das abhängig von mindestens einer Betriebsgröße der Brennkraftmaschine ist, vorzugsweise abhängig von einem Luftmassenstrom, der von dem Luftmassenmesser 17a erfaßt wird, und der Drehzahl n und/ oder der Motortemperatur und/ oder einer dem Hubverlauf der Gaswechselventile der Brennkraftmaschine bestimmende Steuergröße. Des weiteren wird im Schritt S18 ein unterer Diagnoseschwellenwert EGR_DIAG_U aus einem Kennfeld KF4 ermittelt, das abhängig ist von dem Luftmassenstrom, der Drehzahl n und/ oder einer Motortemperatur und/ oder einer den Hubverlauf der Gaswechselventile der Brennkraftmaschine bestimmenden Steuergröße.

In dem Schritt S19 wird überprüft, ob der Diagnosewert EGR_VER größer ist als der obere Diagnoseschwellenwert EGR_DIAG_U. Ist dies der Fall, so wird in den Schritt S20 verzweigt, in dem ein Laufunruhe-Istwert ER_AV und ein Laufunruhe-Sollwert ER_SP ermittelt werden. Ein Verfahren zum Ermitteln des Laufunruhe-Istwertes und -Sollwertes ER_AV, ER_SP ist in einer älteren Anmeldung derselben Anmelderin ( WO 97/22786) beschrieben.

In dem Schritt S20 wird anschließend überprüft, ob der Laufunruhe-Istwert ER_AV größer ist als der Laufunruhe-Sollwert ER_SP. Ist dies der Fall, so wird in den Schritt S22a verzweigt, in dem die Diagnoseeinrichtung 23 erkennt, daß der Durchfluß durch die Abgasrückführleitung 9 zu hoch ist. Anschließend wird das Programm im Schritt S24 beendet.

Ist die Bedingung von Schritt S20 nicht erfüllt, so wird in den Schritt S22 verzweigt, in dem die Diagnoseeinrichtung 23 erkennt, daß das Abgasrückführ-System fehlerfrei ist. Das Programm wird dann im Schritt S24 beendet.

Ist im Schritt S19 der Diagnosewert EGR_VER nicht größer als der obere Diagnoseschwellenwert EGR_DIAG_U, so wird in den Schritt S 21 verzweigt, in dem überprüft wird, ob der Diagnosewert EGR_VER kleiner als der untere Diagnoseschwellenwert EGR_DIAG_L ist.

Ist dies der Fall, so wird in den Schritt S25 verzweigt, in dem überprüft wird, ob der Saugrohrdruck MAP_MES plausibel ist. Dazu wird das Abgasrückführventil geschlossen und gemäß der Schritte S15 bis S21 überprüft, ob der Diagnosewert EGR_VER innerhalb des Wertebereichs liegt, dessen untere Grenze der untere Diagnoseschwellenwert EGR_DIAG_L und dessen obere Grenze der obere Diagnoseschwellenwert EGR_DIAG_U ist. Ist dies der Fall, so ist der Saugrohrdruck MAP_MES plausibel und es wird in den Schritt S26 verzweigt, in dem die Diagnoseeinrichtung 23 auf einen zu geringen Durchfluß durch die Abgasrückführleitung 9 erkennt.

Ist dies nicht der Fall so wird in den Schritt S27 verzweigt, der dem Schritt S9a entspricht. Das Programm wird sowohl nach Schritt S26 als auch nach Schritt S27 in dem Schritt S24 beendet.

In einer weiteren Ausführungsform der Erfindung wird der Diagnosewert EGR_VER, EGR_DIF einer Mittelung unterzogen, und ein gemittelter Diagnosewert MW_EGR_VER, MW_EGR_DIF der weiteren Berechnung zugrunde gelegt. Die Mittelung erfolgt nach einer der im folgenden angegebenen Berechnungvorschriften:

a)

$$MW\_EGR\_VER = MW\_EGR\_VER_{alt} + (EGR\_VER - MW\_EGR\_VER_{alt})\frac{1}{k}$$

b)

$$MW\_EGR\_VER = \frac{1}{i}\sum_{j=1}^{i} EGR-VER_j$$

c)

$$MW\_EGR\_VER = \sqrt{EGR\_VER_1 EGR\_VER_2 .... EGR\_VER_i}$$

mit *i* = Anzahl der Messungen, k = Wichtungsfaktor.

Die in Figur 4 beschriebene Ausführungsform der Diagnoseeinrichtung 23 hat den Vorteil, daß die Diagnose mehrstufig abläuft und somit äußerst präzise Ergebnisse ermittelt werden. Bei einem einwandfrei funktionierenden Abgasrückführ-System erfolgt darüber hinaus kein Beeinflussen des Betriebs der Brennkraftmaschine.

**Patentansprüche**

1.  Diagnoseeinrichtung (23) in einer elektronischen Motorsteuerung (14) für ein Abgasrückführ-System einer Brennkraftmaschine, wobei das Abgasrückführ-System eine Abgasrückführleitung (9) umfaßt, die einen Abgastrakt (8) mit einen Ansaugtrakt (1) verbindet und deren Öffnungsquerschnitt mittels eines Abgasrückführventils (10) einstellbar ist, wobei eine Steuereinrichtung (24) zum Steuern des Abgasrückführventils (10) vorgesehen ist und in dem Ansaugtrakt (1) ein Drucksensor (19) angeordnet ist, der einen Saugrohrdruck (MAP_MES) erfaßt, **dadurch gekennzeichnet,**

    -  **daß** sie Mittel aufweist zum Ermitteln eines Diagnosewertes (EGR_VER, EGR_DIF) des Abgasrückführ-Systems ohne ein Beeinflussen des Betriebs der Brennkraftmaschine, wobei der Diagnosewert (EGR_VER, EGR_DIF) abhängt von dem Saugrohrdruck (MAP_MES) und einem Beobachter-Saugrohrdruck (MAP_MDL, MAP_EGR_MDL), der durch einen Beobachter (25) aus mindestens einer weiteren Betriebsgröße der Brennkraftmaschine ermittelbar ist, und

- **daß** sie Mittel aufweist zum Erkennen des Abgasrückführ-Systems als fehlerhaft, wenn der Diagnosewert (EGR_VER, EGR_DIF) außerhalb eines von mindestens einer Betriebsgröße abhängigen Wertebereichs liegt.

2. Diagnoseeinrichtung nach Anspruch 1, **dadurch gekennzeichnet, daß** der Diagnosewert (EGR_VER) durch Bilden des Verhältnisses ermittelbar ist von dem Istwert (EGR_AV) zu dem Sollwert (EGR_SP) einer Abgasrückführrate.

3. Diagnoseeinrichtung nach Anspruch 1, **dadurch gekennzeichnet, daß** der Diagnosewert (EGR_DIF) ermittelbar ist durch Bilden der Differenz zwischen dem Istwert (EGR_AV) und dem Sollwert (EGR_SP) einer Abgasrückführrate.

4. Diagnoseeinrichtung nach Anspruch 2 oder 3, **dadurch gekennzeichnet, daß** der Sollwert aus einem Kennfeld ermittelbar ist, das abhängt von einer Lastgröße.

5. Diagnoseeinrichtung nach Anspruch 3, **dadurch gekennzeichnet, daß** der Istwert (EGR_AV) nach der Beziehung

$$\frac{MAP\_MES-MAP\_MDL}{MAP\_Mes}$$

ermittelbar ist, wobei MAP_MDL der Beobachter-Saugrohrdruck ist, und daß die Steuereinrichtung (24) den Beobachter (25) aufweist, der ein physikalisches Modell des Ansaugtraktes (1) umfaßt und der in Abhängigkeit von dem Öffnungswinkel einer Drosselklappe (4) und einer Drehzahl (n) den Beobachter-Saugrohrdruck (MAP_MDL) ermittelt.

6. Diagnoseeinrichtung nach Anspruch 1, **dadurch gekennzeichnet, daß** der Diagnosewert (EGR_VER) durch Bilden des Verhältnisses von dem Saugrohrdruck (MAP_MES) zu dem Beobachter-Saugrohrdruck (MAP_EGR_MDL) ermittelbar ist, und daß die Steuereinrichtung (24) den Beobachter (25) aufweist, der ein physikalisches Modell des Ansaugtraktes (1) und des Abgasrückführ-Systems umfaßt und der in Abhängigkeit von einem Öffnungswinkel einer Drosselklappe (4), dem Öffnungsgrad des Abgasrückführventils (10) und der Drehzahl (n) den Beobachter-Saugrohrdruck (MAP_EGR_MDL) ermittelt.

7. Diagnoseeinrichtung nach Anspruch 1, **dadurch gekennzeichnet, daß** der Wertebereich durch einen Diagnoseschwellenwert (EGR_DIAG) und einen Hysteresewert (HYS) vorgegeben ist, daß der Diagnoseschwellenwert (EGR DIAG) aus einem Kennfeld ermittelbar ist, das abhängig ist von mindestens einer Betriebsgröße der Brennkraftmaschine.

8. Diagnoseeinrichtung nach Anspruch 1, **dadurch gekennzeichnet, daß** die Mittel zum Erkennen des Abgasrückführ-Systems als fehlerhaft derart ausgebildet sind, daß ein zu hoher Massenstrom durch die Abgasrückführleitung (9) erkennbar ist, wenn der Diagnosewert (EGR_VER, EGR_DIF) über dem Wertebereich liegt und ein Laufunruhe-Sollwertes (ER_SP) überschritten wird.

9. Diagnoseeinrichtung nach Anspruch 1, **dadurch gekennzeichnet, daß** die Mittel zum Erkennen des Abgasrückführ-Systems als fehlerhaft derart ausgebildet sind, daß wenn der Diagnosewert (EGR_VER, EGR_DIF) unter dem Wertebereich liegt, eine Plausibilitätsprüfung des Istwertes (EGR_AV) durchführbar ist, und daß bei einem plausiblen Istwert (EGR_AV) ein zu geringer Massenstrom durch die Abgasrückführleitung (9) erkennbar ist.

10. Diagnoseeinrichtung nach Anspruch 9, **dadurch gekennzeichnet, daß** zur Plausibilitätsprüfung das Abgasrückführventil (10) schliessbar ist.

**Claims**

1. Diagnostic device (23) in an electronic engine controller (14) for an exhaust gas recirculation system of an internal combustion engine, the exhaust gas recirculation system comprising an exhaust gas recirculation passage (9) which links an exhaust manifold (8) to an intake manifold (1) and whose port cross-section is adjustable by means of an exhaust gas recirculation valve (10), a control device (24) being provided for controlling the exhaust gas recirculation valve (10) and a pressure sensor (19) being disposed in the intake manifold (1) which measures an intake pipe pressure (MAP_MES), **characterised in that**

- it has means of determining a diagnostic value (EGR_VER, EGR_DIF) of the exhaust gas recirculation system without affecting the operation of the internal combustion engine, the diagnostic value (EGR_VER, EGR_DIF) being a function of the intake pipe pressure (MAP_MES) and a monitor intake pipe pressure (MAP_MDL, MAP_EGR_MDL) which can be determined by a monitor (25) from at least one additional operating variable of the internal combustion engine,

- and that it has means of detecting the exhaust gas recirculation system as being defective if the diagnostic value (EGR_VER, EGR_DIF) lies outside a value range depending on at least one operating variable.

2. Diagnostic device according to Claim 1, **characterised in that** the diagnostic value (EGR_VER) can be determined by forming the ratio of the actual value (EGR_AV) to the setpoint value (EGR_SP) of an exhaust gas recirculation rate.

3. Diagnostic device according to Claim 1, **characterised in that** the diagnostic value (EGR_DIF) can be determined by forming the difference between the actual value (EGR_AV) and the setpoint value (EGR_SP) of an exhaust gas recirculation rate.

4. Diagnostic device according to Claim 2 or 3, **characterised in that** the setpoint value can be determined from an engine characteristics map which is dependent on a load variable.

5. Diagnostic device according to Claim 3, **characterised in that** the actual value (EGR_AV) can be determined according to the relation

$$\frac{MAP\_MES-MAP\_MDL}{MAP\_MES}$$

where MAP_MDL is the monitor intake pipe pressure, and that the control device (24) has a monitor (25) which contains a physical model of the intake manifold (1) and which determines the monitor intake pipe pressure (MAP_MDL) as a function of the opening angle of a throttle valve (4) and a speed (n).

6. Diagnostic device according to Claim 1, **characterised in that** the diagnostic value (EGR_VER) can be determined by forming the ratio of the intake pipe pressure (MAP_MES) to the monitor intake pipe pressure (MAP_EGR_MDL), and that the control device (24) has a monitor (25) containing a physical model of the intake manifold (1) and of the exhaust gas recirculation system and which determines the monitor intake pipe pressure (MAP_EGR_MDL) as a function of the opening angle of a throttle valve (4), the degree of opening of the exhaust gas recirculation valve (10) and the speed (n).

7. Diagnostic device according to Claim 1, **characterised in that** the value range is specified by a diagnostic threshold value (EGR_DIAG) and a hysteresis value (HYS), and that the diagnostic threshold value (EGR_DIAG) can be determined from an engine characteristics map which is dependent on at least one operating variable of the internal combustion engine.

8. Diagnostic device according to Claim 1, **characterised in that** the means of detecting that the exhaust gas recirculation system is defective are designed such that an excessively high mass flow through the exhaust gas recirculation passage (9) can be detected if the diagnostic value (EGR_VER, EGR_DIF) lies above the value range and a non-steady-state setpoint value (ER_SP) is exceeded.

9. Diagnostic device according to Claim 1, **characterised in that** the means of detecting that the exhaust gas recirculation system is defective are designed such that, if the diagnostic value (EGR_VER, EGR_DIF) lies below the value range, a plausibility check of the actual value (EGR_AV) can be performed, and that in the event of a plausible actual value (EGR_AV) an excessively low mass flow through the exhaust gas recirculation passage (9) can be detected.

10. Diagnostic device according to Claim 9, **characterised in that** the exhaust gas recirculation valve (10) can be closed for plausibility checking.

**Revendications**

1. Dispositif de diagnostic (23) dans une commande électronique de moteur (14) pour un système de recyclage de gaz d'échappement d'un moteur à combustion interne, le système de recyclage de gaz d'échappement comprenant une tuyauterie de recyclage de gaz d'échappement (9) qui relie un trajet d'échappement (8) à un trajet d'admission (1) et dont la section transversale d'ouverture peut être réglée au moyen d'une valve de recyclage de gaz d'échappement (10), tandis qu'un dispositif de commande (24) est prévu pour commander la valve de recyclage de gaz d'échappement (10) et qu'un capteur de pression (19) qui détecte une pression de tubulure d'admission (MAP_MES) est disposé dans le trajet d'admission (1), **caractérisé**

   - **en ce qu'**il comprend des moyens servant à établir une valeur de diagnostic (EGR_VER, EGR_DIF) du système de recyclage de gaz d'échappement sans une influence du régime du moteur à combustion interne, la valeur de diagnostic (EGR_VER, EGR_DIF) dépendant de la pression de tubulure d'admission (MAP-MES) et d'une pression de tubulure d'admission d'observateur (MAP_MDL, MAP_EGR_MDL) qui peut être établie au moyen d'un observateur (25) à partir d'au moins une autre grandeur de fonctionnement du moteur à combustion interne et
   - **en ce qu'**il comprend des moyens servant à constater comme défectueux le système de recyclage de gaz d'échappement lorsque la valeur de diagnostic (EGR_VER, EGR_DIF) est située à l'extérieur d'une fourchette de valeurs dépendant d'au moins une grandeur de fonctionnement.

2. Dispositif de diagnostic suivant la revendication 1, **caractérisé en ce que** la valeur de diagnostic (EGR_VER) peut être établie au moyen de la formation du rapport de la valeur réelle (EGR_AV) à la valeur de consigne (EGR_SP) d'un taux de recyclage de gaz d'échappement.

3. Dispositif de diagnostic suivant la revendication 1, **caractérisé en ce que** la valeur de diagnostic (EGR_DIF) peut être établie au moyen de la formation de la différence entre la valeur réelle (EGR_AV) et la valeur de consigne (EGR_SP) d'un taux de recyclage de gaz d'échappement.

4. Dispositif de diagnostic suivant la revendication 2 ou 3, **caractérisé en ce que** la valeur de consigne peut être établie à partir d'une table caractéristique qui dépend d'une grandeur de charge.

5. Dispositif de diagnostic suivant la revendication 3, **caractérisé en ce que** la valeur réelle (EGR_AV) peut être établie conformément à la relation

$$\frac{MAP\_MES-MAP\_MDL}{MAP\_MES}$$

   MAP_MDL étant la pression de tubulure d'admission d'observateur, et **en ce que** le dispositif de commande (24) comprend l'observateur (25) qui contient un modèle physique du trajet d'admission (1) qui établit la pression de tubulure d'admission d'observateur (MAP_MDL) en fonction de l'angle d'ouverture d'un papillon des gaz (4) et d'une vitesse de rotation (n).

6. Dispositif de diagnostic suivant la revendication 1, **caractérisé en ce que** la valeur de diagnostic (EGR_VER) peut être établie au moyen de la formation du rapport de la pression de tubulure d'admission (MAP_MES) à la pression de tubulure d'admission d'observateur (MAP_EGR_MDL), et **en ce que** le dispositif de commande (24) comprend l'observateur (25) qui contient un modèle physique du trajet d'admission (1) et du système de recyclage de gaz d'échappement et qui établit la pression de tubulure d'admission d'observateur (MAP_EGR_MDL) en fonction d'un angle d'ouverture d'un papillon des gaz (4), du degré d'ouverture de la valve de recyclage de gaz d'échappement (10) et de la vitesse de rotation (n).

7. Dispositif de diagnostic suivant la revendication 1, **caractérisé en ce que** la fourchette de valeurs est préfixée au moyen d'une valeur de seuil de diagnostic (EGR_DIAG) et d'une valeur d'hystérésis (HYS), **en ce que** la valeur de seuil de diagnostic (EGR_DIAG) peut être établie à partir d'une table caractéristique qui dépend d'au moins une grandeur de fonctionnement du moteur à combustion interne.

8. Dispositif de diagnostic suivant la revendication 1, **caractérisé en ce que** les moyens servant à constater comme défectueux le système de recyclage de gaz d'échappement sont agencés d'une manière telle qu'un débit massique trop élevé dans la tuyauterie de recyclage de gaz d'échappement (9) peut être constaté lorsque la valeur de diagnostic (EGR_VER, EGR_DIF) est située au-dessus de la fourchette de valeurs et une valeur de consigne d'irrégularité de marche (ER_SP) est franchie vers le haut.

9. Dispositif de diagnostic suivant la revendication 1, **caractérisé en ce que** les moyens servant à constater comme défectueux le système de recyclage de gaz d'échappement sont agencés d'une manière telle qu'un examen de plausibilité de la valeur réelle (EGR_AV) peut être effectué lorsque la valeur de diagnostic (EGR_VER, EGR_DIF) est située au-dessous de la fourchette de valeurs, et **en ce que**, dans le cas d'une valeur réelle (EGR_AV) plausible, un débit massique trop faible dans la tuyauterie de recyclage de gaz d'échappement (9) peut être constatée.

10. Dispositif de diagnostic suivant la revendication 9, **caractérisé en ce que** la valve de recyclage de gaz d'échappement (10) peut être fermée pour l'examen de plausibilité.

FIG 1

**FIG 2**

Start — S1

Bestimmen EGR_AV — S2

EGR_SP = — S3

Bestimmen EGR_VER — S4

EGR_DIAG = — S5

S6 — EGR_VER > EGR_DIAG + HYS ? — Ja

Nein

S7

S9 — Ja — EGR_VER < EGR_DIAG-HYS ? — S8

Nein

S10

S11 — Ende

11

# FIG 3

# FIG 4

Start —S14

Bestimmen MAP_EGR_MDL —S15

Erfassen MAP_MES —S16

Bestimmen EGR_VER —S17

EGR_DIAG_O=

EGR_DIAG_U=

—S18

S19 — EGR_VER> EGR_DIAG_U ?

S20 — ER_AV>ER_SP ?

Ja · · · Ja

Nein · · · Nein

S25 — MAP_MES Plausibel ?

S21 — EGR_VER< EGR_DIAG_L ?

Ja · Ja

Nein · Nein

S26

S27

S28

S22

S22a

S24 — Ende